# EUROPEAN PATENT SPECIFICATION

(11) **EP 2 825 516 B1**
(45) Date of publication and mention of the grant of the patent: **17.06.2020**
(21) Application number: 13761586.0
(22) Date of filing: 12.03.2013
(51) Int. Cl.: C22C 32/00, C06B 27/00, C06D 5/00, C06B 33/00, C06B 23/00, C06B 43/00, B22F 1/00, B82Y 30/00, C06B 45/10

(54) **COMPOSITIONS HAVING ALUMINUM PARTICLES DISPERSED IN A CONTINUOUS PHASE**
ZUSAMMENSETZUNGEN MIT IN EINER KONTINUIERLICHEN PHASE DISPERGIERTEN ALUMINIUMTEILCHEN
COMPOSITIONS COMPORTANT DES PARTICULES D'ALUMINIUM DISPERSÉES DANS UN MATÉRIAU EN PHASE CONTINUE

(30) Priority: 12.03.2012 US 201261609463 P
(43) Date of publication of application: 21.01.2015
(73) Proprietor: University Of Central Florida Research Foundation, Inc., Orlando FL 32826-3246 (US)
(72) Inventor: REID, David, L., Orlando, FL 32828 (US); SEAL, Sudipta, Orland, FL 32832 (US); PETERSEN, Eric, College Station, TX 77845 (US)
(74) Representative: Copsey, Timothy Graham
(86) International application number: PCT/US2013/030573
(87) International publication number: WO 2013/138366

(56) References cited:
- KR-B1- 960 010 098
- US-A- 3 730 792
- US-A- 4 337 103
- US-A- 4 543 137
- US-A1- 2007 113 939
- US-A1- 2010 263 774
- US-A1- 2011 030 859
- US-B1- 6 692 655
- US-B1- 7 192 649
- US-B1- 8 114 229

## Description

### FIELD

Disclosed embodiments relate to composite materials having aluminum particles dispersed in a continuous phase, such as aluminum nanoparticles for propellant and explosive formulations, and methods to form such composite materials.

### BACKGROUND

Additives comprising fractions of a percent to several percent of solid propellant mixtures have been considered through the years and are commonly employed in many rocket propellant and explosive compositions. Various additives include burn-rate modifiers (e.g., ferric oxide, metal oxides, and organometallics), curing agents, and plasticizers. In certain cases, additions of small (e.g., <5% by weight) amounts of powdered material to the propellant mixture have been shown to increase or otherwise favorably modify the burn rate. Nanoparticle additives may have an even further influence on the burn rate because of their high surface-to-volume ratios.

Powdered aluminum (metal) is commonly added to solid propellant formulations to increase energy density and specific impulse. Ultrafine or nanoparticulate aluminum has the additional potential to increase burning rates due to its much higher surface-to-volume ratio. However, these materials suffer from difficulties of manufacture, safety hazards, and increasing % aluminum oxide content as the particle size decreases.

Several routes have been developed to produce aluminum nanoparticles, including wire explosion "top-down" methods, and chemical synthesis "bottom-up" methods. Chemical synthesis is advantageous in that no specialized equipment besides standard inert-atmosphere chemical reactors is required, and the bottom-up approach provides the ability to precisely control and tailor the material properties, such as particle size and the passivating oxide layer.

A111₃ (or alane) is a sterically and electronically unsaturated moiety that reacts readily with a wide range of Lewis donors Amine adducts of alane have emerged as convenient aluminum precursors due to the ability of these compounds to decompose to metallic aluminum in the presence of an organometallic titanium catalyst, including at room temperature. Several studies have investigated the use of different solvents, catalysts, temperatures, and organic/inorganic passivating agents. However, this reaction has proven difficult to control due to the fast reaction kinetics and sensitivity to precise reaction conditions. Additionally, these procedures produce agglomerates of aluminum nanoparticles, which precipitate from solution as powders. Besides being a safety hazard, these aluminum powders are difficult to effectively disperse in the polymer binder of the propellant. The aluminum particle agglomeration reduces the ultimate potential of nano-aluminum to provide large increases in propellant burning rates.
US 8,114,229 B1 discloses a self-extinguishable solid propellant.

### SUMMARY

This Summary is provided to introduce a brief selection of disclosed concepts in a simplified form that are further described below in the Detailed Description including the drawings provided. This Summary is not intended to limit the claimed subject matter's scope.

Disclosed embodiments include methods for forming composite materials having dispersed aluminum nanoparticles having metallic aluminum cores, wherein the plurality of aluminum nanoparticles preferably have an average aluminum oxide thickness ≤ 0.2 nm on their outer surface, in a continuous phase material, such as a polymer or a liquid fuel. A polymer binder-first metal-chelate complex catalyst is used to catalyze decomposition of an aluminum precursor.
Such methods overcome the challenge of chemical incompatibility between the polymer and the aluminum precursor (e.g., amine adducts of alane), as well as the catalyst used for the alane decomposition (e.g., titanium tetrachloride or titanium isopropoxide, with polymer binders).
For example, polymer binders having terminating hydroxyl (OH) groups, such as hydroxyl-terminated polybutadiene (HTPB), react almost instantly with alane, and are cross-linked by titanium compounds (and other metal compounds) via their terminating hydroxyl groups.

A chelating agent that reacts with the first metal precursor is used to form a first metal-chelate complex. The titanium-chelate complex is then added to a polymer binder, such as HTPB, to form a non-crosslinking coordination complex with the terminal -OH groups of the polymer binder, thereby protecting the polymer from later attack when mixed with the aluminum precursor. The coordination complex acts as a template-like catalyst for the decomposition of the aluminum precursor (e.g., alane adduct) to generate aluminum nanoparticles having a metallic aluminum core and an optional passivating coating layer bound to a surface of the metallic aluminum core. The result is a "one-pot" synthesis, which produces non-agglomerated metallic aluminum nanoparticles dispersed uniformly in a continuous phase, such as the polymer binder or a liquid fuel (for the liquid fuel embodiment the aluminum precursor is synthesized using the liquid fuel as a solvent).

The aluminum nanoparticles generally have a passivating coating layer thereon that can be chemically or physically bound thereto. In one embodiment, the passivating coating layer is provided by the polymer binder. In another embodiment, the passivating coating layer is formed by including optional passivation agent(s) such as an epoxide, alcohol, carboxylic acid, or amine each including at least one carbon in the adding step that results in formation of passivating compound(s), which can add further protection (beyond that provided by the polymer) that can provide complete protection from oxidation of the metallic aluminum cores by air.

Also disclosed are compositions of matter comprising a continuous phase, and metallic aluminum nanoparticles dispersed in the continuous phase having a passivating coating layer chemically or physically bound to an outer surface of a metallic aluminum cores. The passivating coating layer can be provided by a polymer binder when the polymer binder is the continuous phase, or by passivating compound(s) from epoxides, alcohols, carboxylic acids, or amines which add further oxidation protection (beyond the protection provided by a polymer binder passivation coating), that can provide complete protection from oxidation of the metallic aluminum cores by air..

### BRIEF DESCRIPTION OF THE DRAWINGS

FIG. 1 is a flow chart showing steps for a method of forming composite materials having dispersed aluminum nanoparticles having a metallic aluminum core dispersed in a continuous phase, according to an example embodiment.
FIG. 2 shows an example catalyst structure where each end of the polymer molecule is bonded to an octahedral titanium center, according to an example embodiment.
FIG. 3A is a depiction of an example composition of matter comprising a continuous phase having a plurality of aluminum nanoparticles dispersed therein having a passivating coating layer chemically bound to an outer surface of the metallic aluminum core, according to an example embodiment.
FIG. 3B depicts a disclosed coated aluminum nanoparticle including a metallic aluminum core and a passivating coating layer chemically bound to an outer surface of the metallic aluminum core, according to an example embodiment.

### DETAILED DESCRIPTION

Disclosed embodiments in this Disclosure are described with reference to the attached figures, wherein like reference numerals are used throughout the figures to designate similar or equivalent elements. The figures are not drawn to scale and they are provided merely to illustrate the disclosed embodiments. Several aspects are described below with reference to example applications for illustration. It should be understood that numerous specific details, relationships, and methods are set forth to provide a full understanding of the disclosed embodiments.

One having ordinary skill in the relevant art, however, will readily recognize that the subject matter disclosed herein can be practiced without one or more of the specific details or with other methods. In other instances, well-known structures or operations are not shown in detail to avoid obscuring structures or operations that are not well-known. This Disclosure is not limited by the illustrated ordering of acts or events, as some acts may occur in different orders and/or concurrently with other acts or events. Furthermore, not all illustrated acts or events are required to implement a methodology in accordance with this Disclosure.

One disclosed embodiment is an *in-situ* method of synthesizing nano-aluminum particles using a polymer binder-first metal-chelate complex that functions as a catalyst with an aluminum precursor, wherein the aluminum precursor decomposes resulting in formation of a plurality of aluminum nanoparticles dispersed in a continuous phase material. Disclosed methods avoid or at least substantially reduce the problems of aluminum nanoparticle agglomeration, passivation, and safety hazards characteristic of conventional aluminum nanoparticle synthesis methods and the mixing of aluminum nanoparticles into a polymer composite. The handling of aluminum powders presents serious safety hazards because the powders are flammable/explosive. Since disclosed embodiments never involve aluminum powders, the conventional safety hazard associated with flammability/explosiveness can be avoided.

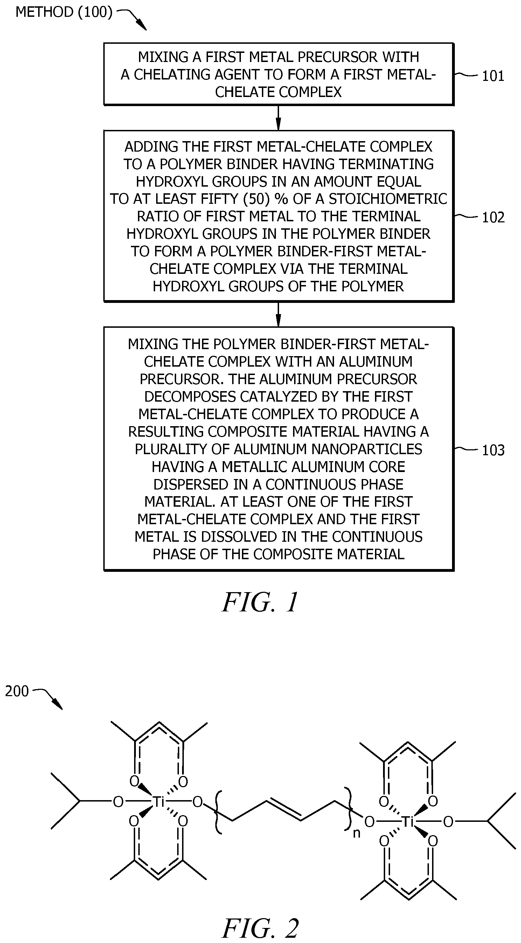

FIG. 1 is a flow chart showing steps for a method 100 of forming a composite material having aluminum nanoparticles comprising metallic aluminum cores dispersed in a continuous phase, such as a polymer or a liquid fuel continuous phase, according to an example embodiment. Step 101 comprises mixing a first metal precursor with a chelating agent to form a first metal-chelate complex. As used herein, the term "chelating agent" is defined as an organic compound which has functionality to complex or sequester metal ions to form stable complexes with a variety of metals. The first metal can comprise titanium, zirconium, other metals such as tin, lead, vanadium, chromium, manganese, cobalt, iron, copper, nickel, as well as and other metals that form similar Lewis-acid complexes.

The first metal precursor can comprise a first metal tetrachloride or alkoxide. In the case the first metal is titanium, the titanium precursor can comprise titanium tetrachloride or a titanium alkoxide. The first metal-based catalyst is first protected by a chelating agent, such as by the bidentate ligand acetylacetonate (ACAC), to form the first metal-chelate complex which functions as a catalyst.

The amount of first metal (which is part of first metal-chelate complex) is generally in the range of 0.01% to 10% on a metal weight % basis in the polymer or liquid fuel, such as a fuel containing 0.01% to 10% titanium if the first metal-chelate complex is titanium based. A lower first metal-chelate complex concentration providing a 0.01% to 2% first metal weight % basis, or in about 0.3% in one specific example, can provide better performance, but the amount of first metal-chelate complex (and thus the amount of first metal) in the composition can be varied depending on the fuel or polymer formulation. The composition is defined herein based on the first metal component only, because the molecular weight of the complex can change significantly depending on what the first metal is bonded to, but the catalytically active site is the first metal itself, so that is the important weight to define.

Step 102 comprises adding the first metal-chelate complex to a polymer binder having terminating hydroxyl groups generally in an amount equal to at least fifty (50) % of a stoichiometric ratio of first metal to the terminal hydroxyl groups in the polymer binder to form a polymer binder-first metal-chelate complex via the terminal hydroxyl groups of the polymer. Accordingly, if the polymer contains 2 hydroxyl groups per molecule, the molar ratio would be at least 1:1 first metal:polymer. Additionally, an excess of first metal is possible. There is generally no upper limit on the amount of first metal. The at least 50 % of the stoichiometric ratio corresponds to roughly the minimum amount of first metal-chelate complex needed to protect the polymer from direct reaction with the aluminum precursor.

The polymer binder provides OH functionality, which is typical of known polymer binders for explosive or propellant compositions. For example, the polymer binder can comprise HTPB or polybutadiene acrylonitrile (PBAN). This method will also work with binders having COOH (carboxylic acid) functionality. Example binders with OH or COOH functionality include, but are not limited to, HTPB and PBAN (both disclosed above), polybutadiene acrylic acid (PBAA), carboxyl terminated polybutadiene (CTPB), polyglycidyl nitrate (PGN), glycidyl azide prepolymer (GAP), poly(3,3-bis(azidomethyl) Oxetane) Poly(BAMO), poly(3-azidomethyl 3-methyl oxetane) Poly(AMMO), and poly(3-nitratomethyl methyl oxetane) poly(NIMMO).

Step 102 can further comprise optionally including at least one of an epoxide, alcohol, carboxylic acid, or amine each comprising at least one carbon atom to provide a passivating coating layer. One particular additional passivating molecule that has been found to allow for high aluminum nanoparticle particle concentrations is 1,2-epoxyhexane.

However, it may be advantageous to have formulations without any optional passivating materials, so that the polymer binder functions as the passivation layer. Passivating molecules when included are typically present in a significant amount, generally a 1:5 molar ratio of passivator:aluminum, although this can reduce the overall performance of the propellant by lowering the burning rate and/or the specific impulse. Importantly, it has been found a significant correlation between the amount and molecular weight of the passivating molecule and the viscosity of the uncured binder containing aluminum particles. The presence of passivating molecules bonded to the aluminum nanoparticles, especially large molecules, can significantly increase the polymer viscosity, and this makes the mix far more difficult to process, since the composition is generally cast or extruded and then cured (crosslinked) in a mold to make a solid propellant. This can effectively limit the concentration of aluminum in the binder to a few percent (e.g., maximum 10%) before the viscosity gets too high. By avoiding the use of a passivating agent, a significantly lower viscosity of the uncured binder is provided, allowing a much higher amount of nano-aluminum, such as about double or more.

Step 103 comprises mixing the polymer binder-first metal-chelate complex with an aluminum precursor. The aluminum precursor can comprise an amine adduct of alane. The aluminum precursor decomposes catalyzed by the first metal-chelate complex to produce a plurality of aluminum nanoparticles dispersed in a continuous phase material having a metallic aluminum cores. At least one of the first metal-chelate complex and the first metal is dissolved in the continuous phase.

In embodiments that include optional passivating agent(s), the resulting passivating coating layer is generally physically or chemically bound to the outer surface of the metallic aluminum cores. If an optional passivating compound is added in step 102, the passivating coating layer formed generally results in little or no polymer binder bound (physically or chemically) directly to the aluminum nanoparticles. This embodiment can provide complete protection of the metallic aluminum cores from oxidation by air.

If no optional passivating agent is added in step 102, then it is the polymer binder itself which can be considered to be the passivating layer for the metallic aluminum cores of the aluminum nanoparticles, where the polymer binder can be physically or chemically bound to the metallic aluminum cores. In this embodiment, the polymer binder as the coating layer may not fully protect the metallic aluminum cores of the nanoparticles from oxidation/reaction with air, but will generally provide some protection to limit the thickness of the resulting aluminum oxide layer on the aluminum nanoparticles. However, it may be possible to tailor the structure and composition of the polymer binder or polymer-catalyst complex to provide better passivation and oxidation protection for the metallic aluminum cores from oxidation by air.

The final state of the first metal-chelate complex after the reaction in step 103 can vary. It is possible that, since the aluminum is a strong reducing agent, the first metal-chelate complex catalyst is eventually reduced to the metallic state and no longer present as a Lewis acid complex. However, the catalyst may remain as a first metal-chelate complex dissolved in the continuous phase (polymer or liquid fuel).

The continuous phase can comprise liquid polymer solution. In another embodiment the continuous phase material can comprise a liquid fuel. The liquid fuel can comprise hydrocarbons, other fuels, or liquid monopropellants such as hydrazine, ethylene oxide, and nitromethane can also be used as the liquid continuous phase. For the liquid fuel embodiment, the method further comprises synthesizing the aluminum precursor using the liquid fuel as a solvent before the mixing (step 103).

The order of addition can be significant. By first adding the first metal-chelate complex to the polymer (step 102), and then mixing with the aluminum precursor (step 103), rather than the reverse order, reaction of the aluminum precursor with the hydroxyl groups on the polymer is avoided so that the polymer will not cross-linked/solidify.

The reaction should be conducted under inert atmosphere (i.e., non-oxidizing, e.g. argon or nitrogen), up until at least either the optional passivating agent is added or, if no passivating agent is used, the polymer binder concentration is brought to a level of at least about 1:20 polymer binder:aluminum (molar ratio). After this, the mixture is air stable, and there is no requirement for an inert atmosphere.

Temperature can be used to control the rate of the reaction. In one particular embodiment the adding step is performed at room temperature, and then the solution is rapidly heated solution to the reflux temperature (usually between 70 °C and 120 °C, depending on the choice of solvent). However, the addition can also be done with the solution already at the boiling point to increase the reaction rate, or chilled to slow the reaction rate.

There are some steps that can be added to improve the yield. When the aluminum precursor comprises an amine adduct of alane, a byproduct of the reaction is the amine (from the alane complex), which generally has a lower boiling point than the reaction solvent, which can be removed from the reaction as the solution boils, or afterwards by distillation. Also, to ensure that essentially all the aluminum precursor has reacted, additional small amounts of first metal-chelate complex, or first metal-chelate-polymer complex, can be added as the reaction proceeds.

The aluminum nanoparticle size has been found to be controllable, such as to a size between 5 nm and 50 nm, by the aluminum precursor and polymer binder concentration ratios. As described above, the aluminum nanoparticles can be made air-stable, without a measurable aluminum oxide layer on their outer surface, by providing a passivating coating including optional passivating compounds, such as an epoxide, alcohol, carboxylic acid, or amine in the coating layer. As noted above, if optional passivating compound(s) is added in step 102, the passivating coating layer formed results in little or no polymer binder bound (physically or chemically) directly to the aluminum nanoparticles. The lack of any aluminum powder handling in disclosed propellant manufacturing methods makes disclosed methods safe and efficient routes to maximize energy density and burning rate. The residual organotitanium in the binder can also act as a combustion catalyst itself, or can be used as the titanium source for "in-situ" synthesis of TiO₂ (titania) nanoparticle catalysts.

In the embodiment with continuous phase is a polymer solution, the aluminum nanoparticles dispersed in the liquid polymer solution may be used to form propellant and explosive formulations, such as by dry mixing, or wet mixing with a liquid fuel and an oxidizer (the liquid polymer being soluble in the liquid (e.g., hydrocarbon) fuel). Moreover, uses may include composite propellants, which contain a mixed-in solid oxidizer, and hybrid propellants, which comprise a solid component (the polymer binder, aluminum nanoparticles, and other additives), and a separate oxidizer such as liquid oxygen.

As notes above, one wet mixing embodiment is a fuel application that provides liquid fuels having in-situ-formed aluminum nanoparticles. Aluminum nanoparticles are promising additives for liquid fuels because of their high energy density and flame temperature. However, one of the most serious challenges impeding their practical use is the difficulty of dispersing and maintaining a well-mixed suspension of aluminum powder in liquid fuels, such as liquid hydrocarbon fuels.

This liquid fuel embodiment addresses this problem by forming the aluminum nanoparticles from chemical precursors synthesized directly in the fuel itself, where the fuel functions in this embodiment as a solvent for forming the aluminum precursor, and with the assistance of a polymer-conjugated catalyst (polymer binder-first metal-chelate complex) . The result is a stable suspension of unagglomerated (dispersed) aluminum nanoparticles in the liquid fuel which provides the continuous phase, which can comprise coated aluminum nanoparticles.

The coated aluminum nanoparticles include a metallic aluminum core and a passivating coating layer chemically bound to a surface of the metallic aluminum core, where the passivating coating layer comprises the polymer. This embodiment will simplify the use of aluminum-loaded liquid fuels by eliminating the need to actively mix the fuel to prevent the particles from settling. It will also reduce engine wear and nozzle erosion, improve the fluid flow characteristics and droplet behavior during combustion, and improve the safety of metal-loaded fuel manufacturing by eliminating the handling of reactive nanopowders.

All reactions are generally conducted in a chemically inert atmosphere, such as a nitrogen or argon atmosphere. The aluminum-containing chemical precursor can be a tertiaryamine adduct of alane, e.g. AlH₃.NR₃. This compound can be synthesized directly in the liquid fuel (which acts as a solvent) by methods including either of the one of two methods described below.
Method 1: The simple extraction of alane from lithium aluminum hydride using tertiary amines according to the equation: 3LiAlH₄ + 2NR₃ → 2ALH₃.NR₃ + Li₃AlH₆
   The insoluble Li₃AlH₆ byproduct can be removed by simple filtration.
Method 2: A reaction similar to Method 1, but assisted by AlCl₃ to give only LiCl as an insoluble byproduct, which also can be removed by filtration: AlCl₃ + 3LiAlH₄ + 4NR₃ → 4AlH₃.NR₃ + 3LiCl

The alane-amine adduct dissolved in the fuel can then be decomposed by addition of a first metal (e.g., titanium)-based catalyst to form an aluminum nanoparticle suspension, and the low-boiling-point amine byproduct can be removed by distillation: AlH₃.NR₃ -> Al + 3/2H₂ + NR₃.

In order to produce a stable, unagglomerated suspension of aluminum nanoparticles, the reaction can be conducted with the use of a polymer-conjugated titanium homogeneous catalyst. This catalyst accelerates the decomposition of AlH₃.NR₃, and also controls the particle nucleation and growth by interacting with the particle surfaces to prevent particle agglomeration and precipitation. The catalyst contains 6 coordinate / octahedral bonding geometry on the titanium center(s), which are bonded via at least one ligand to a polymer or oligomer molecule. In experiments performed, the polymer was HTPB with approximately a 2,000 molecular weight, but other polymers that can bond as ligands to a first metal (e.g., titanium) complex can also be used. In the catalyst structure 200 shown in FIG. 2, each end of the polymer molecule is bonded to an octahedral titanium center.

The catalyst structure 200 shown in FIG. 2 can be formed by first combining a tetrahedral titanium complex such as titanium tetrachloride or titanium tetraisopropoxide with a strong bidentate ligand such as acetylacetone, followed by mixing this compound with the polymer or oligomer. The liquid fuel can again be used as a solvent for the synthesis of the polymer-conjugated catalyst.

Following separate preparation of the catalyst and the amine-alane, both in the liquid fuel, the two solutions are generally combined at room temperature. Optionally, the reaction can be heated to accelerate the reaction and encourage particle growth. An external optional passivating compound, such as various carboxylic acids, alcohols, or epoxides, can be added during the reaction to help prevent the formation of an oxide layer on the aluminum particles when they are exposed to air.

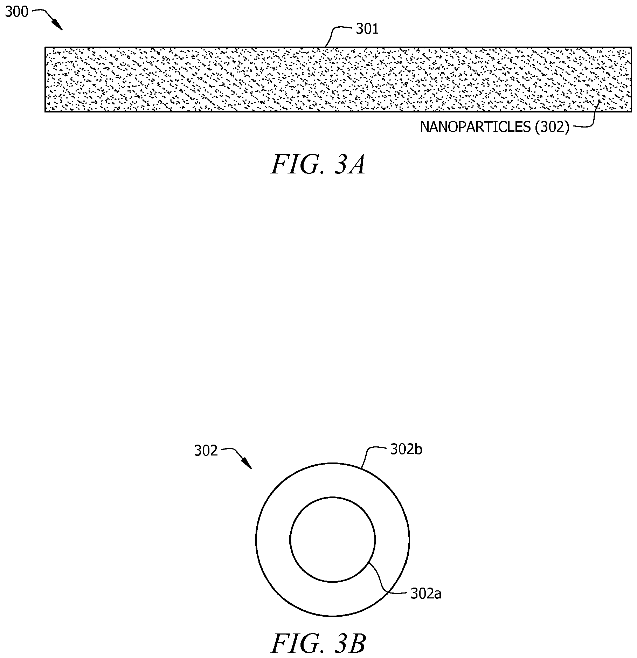

Also disclosed are compositions of matter comprising a polymer continuous phase, and aluminum nanoparticles dispersed therein. FIG. 3A is a depiction of a composition of matter 300 comprising a continuous phase 301 having a plurality of coated metallic aluminum nanoparticles 302 therein, such as being 5 nm to 50 nm in size. As described above the continuous phase can be a polymer (e.g., a liquid polymer) and a liquid fuel (e.g., a hydrocarbon fuel). At least one of the first metal-chelate complex and the first metal is dissolved in the continuous phase. The coated nanoparticles 302 include a metallic aluminum core 302a and a passivating coating layer 302b as shown in FIG. 1B comprising the polymer binder used for the synthesis.

One or more optional additional passivating additives as described above can provide a coating layer including passivation compounds (e.g., epoxides, alcohols, carboxylic acids, or amines each comprising at least one carbon atom), which further provides passivation protection (as compared to the passivation provided by the polymer binder) against aluminum oxide formation from oxidation of the surface of the metallic aluminum core 302a, so that the aluminum nanoparticles become air stable so that despite air exposure there is no measurable aluminum oxide layer between the aluminum core 302a and the coating layer 302b. As noted above, if an optional passivating compound is included, the passivating coating layer has little or no polymer binder bound (physically or chemically) directly to the aluminum nanoparticles.

As described above, the organometallic first metal-binder complex can protect the polymer binder (e.g., HTPB) from unintended crosslinking, so that the polymer binder in disclosed compositions will not be measurable crosslinked. Moreover, as described above, when an additional passivating agent is used, the coating layer formed prevents oxidation of the aluminum cores so that there is generally no measurable aluminum oxide layer between the aluminum core 302a and the coating layer 302b. The high level of aluminum nanoparticle 302 dispersion advantageously provides a very small average diffusion distance, such as from 10 nm to 100 nm. The thickness of the coating layer is generally 2 nm to 5 nm. The coated aluminum nanoparticles have an average aluminum oxide thickness ≤ 0.2 nm. The aluminum nanoparticles 302 generally have the roughly spherical shape depicted in FIG. 3B, but can have other shapes.

Disclosed polymer composites having highly dispersed aluminum particles as noted above can be used for propellant and explosive formulations. However, as disclosed above, disclosed polymer composites having highly dispersed aluminum particles can be used to add coated aluminum particles to liquid fuels to add to performance, such as to kerosene. For use in liquid fuels, the amount of polymer to form the polymer solution selected is generally based in slightly more than the minimum amount of polymer to prevent nanoparticle aggregation, such as about 0.3 wt. %.

### EXAMPLES

Disclosed embodiments are further illustrated by the following specific Examples, which should not be construed as limiting the scope or content of this Disclosure in any way.

Experiments were performed to confirm disclosed embodiments work whether or not there is the addition of an optional additional passivating agent (e.g. epoxyhexane). If no additional passivating agent is added, then the passivating coating layer includes the polymer binder (e.g., HTPB) itself which helps protects the surface of the aluminum particles from reaction with oxygen, as long as sufficient binder is added. Although not determined experimentally, the minimum amount of binder needed for formation of a passivating coating layer for successful protection of the aluminum nanoparticles is believed to be around 1:20 polymer (e.g., HTPB):aluminum molar ratio, or greater.

It may be helpful to use only a small amount of binder-first metal complex in the initial reaction to decompose the alane and form the plurality of aluminum particles. It has been found that molar ratios of 1:50 or 1:100 HTPB:aluminum work well. That works out to mass ratios of about 1:2 or 1:1 HTPB:aluminum. After the initial reaction is complete and the volatile amine byproduct is boiled/distilled off (and the passivating agent, if used, is added), additional HTPB can be added to increase the total volume and bring the aluminum concentration in the final composite to the desired level.

It was initially suspected that pure HTPB would react with and be cross-linked by aluminum nanoparticles, and so any additional HTPB added would need to have its OH groups protected by complexing with first metal or first metal compound particles (e.g., titanium or TiO₂ nanoparticles. However, this does not seem to be the case. Disclosed methods have been found work well whether the additional HTPB or other polymer binder added is in pure form or is complexed with a first metal such as titanium.

While various disclosed embodiments have been described above, it should be understood that they have been presented by way of example only, and not limitation.

Thus, the breadth and scope of the subject matter provided in this Disclosure should not be limited by any of the above explicitly described embodiments. Rather, the scope of this Disclosure should be defined in accordance with the following claims.

The terminology used herein is for the purpose of describing particular embodiments only and is not intended to be limiting. As used herein, the singular forms "a," "an," and "the" are intended to include the plural forms as well, unless the context clearly indicates otherwise. Furthermore, to the extent that the terms "including," "includes," "having," "has," "with," or variants thereof are used in either the detailed description and/or the claims, such terms are intended to be inclusive in a manner similar to the term "comprising."

Unless otherwise defined, all terms (including technical and scientific terms) used herein have the same meaning as commonly understood by one of ordinary skill in the art to which embodiments of the invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

## Claims

1. A method of forming a composite material, comprising:
mixing a first metal precursor including a first metal with a chelating agent to form a first metal-chelate complex;
adding said first metal-chelate complex to a polymer binder having terminating hydroxyl groups to form a polymer binder-first metal-chelate complex with said terminating hydroxyl groups, wherein said first metal is other than aluminum, and
mixing said polymer binder-first metal-chelate complex with an aluminum precursor, wherein said aluminum precursor decomposes resulting in formation of a plurality of aluminum nanoparticles dispersed in a continuous phase material, said plurality of aluminum nanoparticles having a metallic aluminum core, said plurality of aluminum nanoparticles preferably having an average aluminum oxide thickness ≤ 0.2 nm on their outer surface
wherein at least one of first metal-chelate complex and said first metal is dissolved in said continuous phase material.

2. The method of claim 1, wherein said polymer binder comprises hydroxyl-terminated polybutadiene (HTPB), said HTPB providing said continuous phase material.

3. The method of claim 1, wherein said continuous phase material comprises a liquid fuel, further comprising synthesizing said aluminum precursor using said liquid fuel as a solvent before said mixing.

4. The method of any one of Claims 1 to 3, wherein said first metal comprises titanium, zirconium tin, lead, vanadium, chromium, manganese, cobalt, iron, copper, or nickel.

5. The method of claim 1, wherein said first metal comprises titanium, and wherein said first metal precursor comprises titanium tetrachloride or a titanium alkoxide.

6. The method of claim 1, wherein said plurality of aluminum nanoparticles are coated aluminum nanoparticles having a passivating coating layer provided by said polymer binder.

7. The method of any one of the preceding claims, wherein said plurality of aluminum nanoparticles are coated aluminum nanoparticles having a passivating coating layer, further comprising including at least one of an epoxide, alcohol, carboxylic acid, or amine, wherein the epoxide, alcohol, carboxylic acid, or amine each include at least one carbon atom as a passivating agent in said adding, and wherein said passivating coating layer compromises said epoxide, said alcohol, said carboxylic acid, or said amine.

8. The method of any one of the preceding claims, wherein said adding comprises using amounts of said first metal-chelate complex to said polymer binder to provide at least fifty (50) % of a stoichiometric ratio of said first metal to said terminating hydroxyl groups in said polymer binder.

9. A composition of matter, comprising:
a continuous phase material, and
a plurality of aluminum nanoparticles uniformly dispersed in said continuous phase material, said plurality of aluminum nanoparticles having a metallic aluminum core, wherein said plurality of aluminum nanoparticles preferably have an average aluminum oxide thickness ≤ 0.2 nm on their outer surface, and
at least one of first metal-chelate complex including a first metal other than aluminum, or said first metal, dissolved in said continuous phase material.

10. The composition of matter of claim 9, wherein said continuous phase material comprises hydroxyl-terminated polybutadiene (HTPB).

11. The composition of matter of claim 9, wherein said continuous phase material comprises a liquid fuel.

12. The composition of matter of any one of Claims 9 to 11, wherein said first metal comprises titanium, zirconium tin, lead, vanadium, chromium, manganese, cobalt, iron, copper, or nickel.

13. The composition of matter of claim 12, wherein said first metal comprises titanium.

14. The composition of matter of any one of Claims 9 to 13, wherein said plurality of aluminum nanoparticles are coated aluminum nanoparticles having a passivating coating layer chemically or physically bound thereon, wherein said passivating coating layer may comprise at least one of an epoxide, alcohol, carboxylic acid, or amine each comprising at least one carbon atom.

15. The composition of matter of claim 14, wherein said continuous phase material is a polymer binder, and wherein said passivating coating layer is provided by said polymer binder.

## Patentansprüche

1. Verfahren zur Bildung eines Verbundwerkstoffs, das Folgendes umfasst:
Mischen einer ein erstes Metall enthaltenden ersten Metallvorstufe mit einem Chelatbildner zur Bildung eines Chelatkomplexes mit dem ersten Metall;
Zugeben des Chelatkomplexes mit dem ersten Metall zu einem Polymerbindemittel mit endständigen Hydroxylgruppen zur Bildung eines Chelatkomplexes aus Polymerbindemittel und erstem Metall über die endständigen Hydroxylgruppen, wobei das erste Metall von Aluminium verschieden ist, und
Mischen des Chelatkomplexes aus Polymerbindemittel und erstem Metall mit einer Aluminiumvorstufe, wobei die Aluminiumvorstufe unter Bildung einer Mehrzahl von Aluminiumnanopartikeln, die in einem eine kontinuierliche Phase bildenden Material dispergiert sind, zerfällt, wobei die Mehrzahl von Aluminiumnanopartikeln einen Kern aus metallischem Aluminium aufweisen, und wobei die Mehrzahl von Aluminiumnanopartikeln vorzugsweise eine durchschnittliche Aluminiumoxiddicke von ≤ 0,2 nm auf ihrer äußeren Oberfläche aufweisen,
wobei der Chelatkomplex mit dem ersten Metall und/oder das erste Metall in dem eine kontinuierliche Phase bildenden Material gelöst sind.

2. Verfahren nach Anspruch 1, wobei das Polymerbindemittel Polybutadien mit endständigen Hydroxylgruppen (HTPB) umfasst, wobei das HTPB das eine kontinuierliche Phase bildende Material bereitstellt.

3. Verfahren nach Anspruch 1, wobei das eine kontinuierliche Phase bildende Material einen Flüssigbrennstoff umfasst, ferner umfassend das Synthetisieren der Aluminiumvorstufe unter Verwendung des Flüssigbrennstoffs als Lösungsmittel vor dem Mischen.

4. Verfahren nach einem der Ansprüche 1 bis 3, wobei das erste Metall Titan, Zirconium, Zinn, Blei, Vanadium, Chrom, Mangan, Cobalt, Eisen, Kupfer oder Nickel umfasst.

5. Verfahren nach Anspruch 1, wobei das erste Metall Titan umfasst und wobei die erste Metallvorstufe Titantetrachlorid oder ein Titanalkoholat umfasst.

6. Verfahren nach Anspruch 1, wobei es sich bei der Mehrzahl von Aluminiumnanopartikeln um umhüllte Aluminiumnanopartikel mit einer durch das Polymerbindemittel bereitgestellten passivierenden Hüllschicht handelt.

7. Verfahren nach einem der vorhergehenden Ansprüche, wobei es sich bei der Mehrzahl von Aluminiumnanopartikeln um umhüllte Aluminiumnanopartikel mit einer passivierenden Hüllschicht handelt, ferner umfassend einschließlich ein Epoxid, einen Alkohol, eine Carbonsäure und/oder ein Amin, wobei das Epoxid, der Alkohol, die Carbonsäure oder das Amin jeweils mindestens ein Kohlenstoffatom als Passivierungsmittel bei dem Zugeben enthalten, und wobei die passivierende Hüllschicht das Epoxid, den Alkohol, die Carbonsäure oder das Amin umfasst.

8. Verfahren nach einem der vorhergehenden Ansprüche, wobei das Zugeben umfasst, dass der Chelatkomplex mit dem ersten Metall in Bezug auf das Polymerbindemittel in Mengen verwendet wird, bei denen sich ein stöchiometrisches Verhältnis von mindestens (50) % von dem ersten Metall zu den endständigen Hydroxylgruppen in dem Polymerbindemittel ergibt.

9. Stoffgemisch, das Folgendes umfasst:
ein eine kontinuierliche Phase bildendes Material und eine Mehrzahl von Aluminiumnanopartikeln, die in dem eine kontinuierliche Phase bildenden Material gleichmäßig dispergiert sind, wobei die Mehrzahl von Aluminiumnanopartikeln einen Kern aus metallischem Aluminium aufweisen, und wobei die Mehrzahl von Aluminiumnanopartikeln vorzugsweise eine durchschnittliche Aluminiumoxiddicke von ≤ 0,2 nm auf ihrer äußeren Oberfläche aufweisen, und
einen Chelatkomplex mit einem ersten Metall, einschließlich eines von Aluminium verschiedenen ersten Metalls, und/oder das erste Metall, der bzw. das bzw. die in dem eine kontinuierliche Phase bildenden Material gelöst ist bzw. sind.

10. Stoffgemisch nach Anspruch 9, wobei das eine kontinuierliche Phase bildende Material Polybutadien mit endständigen Hydroxylgruppen (HTPB) umfasst.

11. Stoffgemisch nach Anspruch 9, wobei das eine kontinuierliche Phase bildende Material einen Flüssigbrennstoff umfasst.

12. Stoffgemisch nach einem der Ansprüche 9 bis 11, wobei das erste Metall Titan, Zirconium, Zinn, Blei, Vanadium, Chrom, Mangan, Cobalt, Eisen, Kupfer oder Nickel umfasst.

13. Stoffgemisch nach Anspruch 12, wobei das erste Metall Titan umfasst.

14. Stoffgemisch nach einem der Ansprüche 9 bis 13, wobei es sich bei der Mehrzahl von Aluminiumnanopartikeln um umhüllte Aluminiumnanopartikel mit einer darauf chemisch oder physikalisch gebundenen passivierenden Hüllschicht handelt, wobei die passivierende Hüllschicht ein Epoxid, einen Alkohol, eine Carbonsäure und/oder ein Amin mit jeweils mindestens einem Kohlenstoffatom umfassen kann.

15. Stoffgemisch nach Anspruch 14, wobei es sich bei dem eine kontinuierliche Phase bildenden Material um ein Polymerbindemittel handelt und wobei die passivierende Hüllschicht durch das Polymerbindemittel bereitgestellt wird.

## Revendications

1. Procédé de formation d'un matériau composite, comprenant :
le mélange d'un précurseur de premier métal renfermant un premier métal avec un agent chélatant pour former un complexe premier métal-chélate ;
l'ajout dudit complexe premier métal-chélate à un liant polymère ayant des groupes hydroxyle terminaux pour former un complexe liant polymère-premier métal-chélate avec lesdits groupes hydroxyle terminaux, ledit premier métal étant autre que l'aluminium, et
le mélange dudit complexe liant polymère-premier métal-chélate avec un précurseur d'aluminium, ledit précurseur d'aluminium se décomposant ce qui aboutit à la formation d'une pluralité de nanoparticules d'aluminium dispersées dans un matériau de phase continue, ladite pluralité de nanoparticules d'aluminium ayant un noyau d'aluminium métallique, ladite pluralité de nanoparticules d'aluminium ayant de préférence une épaisseur moyenne d'oxyde d'aluminium ≤ 0,2 nm sur leur surface externe,
dans lequel le complexe premier métal-chélate et/ou ledit premier métal sont dissous dans ledit matériau de phase continue.

2. Procédé selon la revendication 1, dans lequel ledit liant polymère comprend du polybutadiène à terminaison hydroxyle (PBTH), ledit PBTH fournissant ledit matériau de phase continue.

3. Procédé selon la revendication 1, dans lequel ledit matériau de phase continue comprend un combustible liquide, comprenant en outre la synthèse dudit précurseur d'aluminium à l'aide dudit combustible liquide en tant que solvant avant ledit mélange.

4. Procédé selon l'une quelconque des revendications 1 à 3, dans lequel ledit premier métal comprend du titane, du zirconium, de l'étain, du plomb, du vanadium, du chrome, du manganèse, du cobalt, du fer, du cuivre ou du nickel.

5. Procédé selon la revendication 1, dans lequel ledit premier métal comprend du titane et dans lequel ledit précurseur de premier métal comprend du tétrachlorure de titane ou un alcoolate de titane.

6. Procédé selon la revendication 1, dans lequel ladite pluralité de nanoparticules d'aluminium sont des nanoparticules d'aluminium revêtues ayant une couche de revêtement de passivation fournie par ledit liant polymère.

7. Procédé selon l'une quelconque des revendications précédentes, dans lequel ladite pluralité de nanoparticules d'aluminium sont des nanoparticules d'aluminium revêtues ayant une couche de revêtement de passivation, comprenant en outre l'incorporation d'un époxyde, d'un alcool, d'un acide carboxylique et/ou d'une amine, l'époxyde, l'alcool, l'acide carboxylique ou l'amine renfermant chacun au moins un atome de carbone, en tant qu'agent de passivation dans ledit ajout et dans lequel ladite couche de revêtement de passivation comprend ledit époxyde, ledit alcool, ledit acide carboxylique ou ladite amine.

8. Procédé selon l'une quelconque des revendications précédentes, dans lequel ledit ajout comprend l'utilisation de quantités dudit complexe premier métal-chélate par rapport audit liant polymère pour fournir au moins cinquante (50) % d'un rapport stœchiométrique dudit premier métal auxdits groupes hydroxyle terminaux présents dans ledit liant polymère.

9. Composition de matière, comprenant :
un matériau de phase continue et
une pluralité de nanoparticules d'aluminium dispersées de manière uniforme dans ledit matériau de phase continue, ladite pluralité de nanoparticules d'aluminium ayant un noyau d'aluminium métallique, ladite pluralité de nanoparticules d'aluminium ayant de préférence une épaisseur moyenne d'oxyde d'aluminium ≤ 0,2 nm sur leur surface externe, et
un complexe premier métal-chélate renfermant un premier métal autre que l'aluminium et/ou ledit premier métal, dissous dans ledit matériau de phase continue.

10. Composition de matière selon la revendication 9, dans laquelle ledit matériau de phase continue comprend du polybutadiène à terminaison hydroxyle (PBTH).

11. Composition de matière selon la revendication 9, dans laquelle ledit matériau de phase continue comprend un combustible liquide.

12. Composition de matière selon l'une quelconque des revendications 9 à 11, dans laquelle ledit premier métal comprend du titane, du zirconium, de l'étain, du plomb, du vanadium, du chrome, du manganèse, du cobalt, du fer, du cuivre ou du nickel.

13. Composition de matière selon la revendication 12, dans laquelle ledit premier métal comprend du titane.

14. Composition de matière selon l'une quelconque des revendications 9 à 13, dans laquelle ladite pluralité de nanoparticules d'aluminium sont des nanoparticules d'aluminium revêtues sur lesquelles une couche de revêtement de passivation est liée chimiquement ou physiquement, dans laquelle ladite couche de revêtement de passivation peut comprendre un époxyde, un alcool, un acide carboxylique et/ou une amine comprenant chacun au moins un atome de carbone.

15. Composition de matière selon la revendication 14, dans laquelle ledit matériau de phase continue est un liant polymère et dans laquelle ladite couche de revêtement de passivation est fournie par ledit liant polymère.
